# FASCICULE DE BREVET EUROPEEN

(11) **EP 1 750 967 B1**
(45) Date de publication et mention de la délivrance du brevet: **05.05.2010**
(21) Numéro de dépôt: 05776376.5
(22) Date de dépôt: 01.06.2005
(51) Int. Cl.: B60K 6/38

(54) **ELEMENT DE TRANSMISSION A EMBRAYAGES HUMIDES POUR CHAINE DE TRACTION HYBRIDE DE VEHICULE AUTOMOBILE, ET VEHICULE AUTOMOBILE EQUIPE D'UN TEL ELEMENT**
HYDRAULIKKUPPLUNG-ÜBERTRAGUNGSELEMENT FÜR EINEN HYBRIDANTRIEBSSTRANG EINES KRAFTFAHRZEUGES UND KRAFTFAHRZEUG MIT DERARTIGEM ELEMENT
HYDRAULIC CLUTCH TRANSMISSION ELEMENT FOR A HYBRID TRACTION CHAIN OF A MOTOR VEHICLE, AND MOTOR VEHICLE COMPRISING ONE SUCH ELEMENT

(30) Priorité: 03.06.2004 FR 0406024
(43) Date de publication de la demande: 14.02.2007
(73) Titulaire: PEUGEOT CITROËN AUTOMOBILES S.A., 78140 Vélizy Villacoublay (FR)
(72) Inventeur: COMBES, Emmanuel, F-91410 SAINT-CYR-SOUS-DOURDAN (FR); VICTOR, Jérôme, F- 78500 SARTROUVILLE (FR)
(86) Numéro de dépôt international: PCT/FR2005/050400
(87) Numéro de publication internationale: WO 2005/123435

(56) Documents cités:
- FR-A- 2 814 121
- GB-A- 2 251 041
- GB-A- 2 389 151
- US-A- 5 801 499
- US-A1- 2002 066 607
- US-A1- 2003 148 843

## Description

L'invention concerne un élément de transmission pour une chaîne de traction de type hybride parallèle, ledit élément comprenant un arbre d'entrée de mouvement destiné à être relié à un moteur thermique, un arbre de sortie de mouvement destiné à être relié à une boîte de vitesses, une machine électrique comportant un stator et un rotor, un premier embrayage de liaison entre l'arbre d'entrée et le rotor, et un second embrayage de liaison entre le rotor et l'arbre de sortie, lesdits embrayages étant de type humide, ledit élément de transmission comportant en outre un circuit de fluide de lubrification et/ou de refroidissement, et des moyens de commande desdits embrayages, qui comprennent un circuit de fluide de commande, notamment un circuit de commande hydraulique, le circuit de commande comprenant une chambre de pression pour chaque embrayage, telle que la pression de fluide de commande qui règne dans une chambre de pression détermine l'état de l'embrayage respectif.

On entend par chaîne de traction hybride parallèle une chaîne de traction fournissant à un arbre de roue une énergie mécanique à partir d'au moins un moteur de type « irréversible » (en général un moteur thermique) et d'au moins un moteur de type « réversible » (en général une machine électrique que l'on désignera par la suite par le terme « moteur électrique », étant entendu que ce « moteur » pourra fonctionner suivant un mode moteur et un mode générateur), et dans laquelle le noeud d'énergie provenant des deux moteurs est de nature mécanique.

La demande de brevet français FR 2 814 121 décrit un élément de transmission du type ci-dessus, dans lequel les embrayages sont ouverts, c'est-à-dire en position débrayée ou encore glissante, en l'absence d'application d'une pression de commande.

Il s'avère que sur la durée de vie cumulée du véhicule en fonctionnement, l'un au moins des embrayages est plus souvent fermé qu'ouvert. Par conséquent, le circuit de commande de cet embrayage, et plus globalement des deux embrayages, consomme une énergie, pour la mise en circulation et en pression du fluide de commande, très supérieure à l'énergie utile pour réaliser la commande.

L'invention a pour objet de remédier à cet inconvénient, et de proposer un élément de transmission du type ci-dessus, dont la consommation d'énergie dévolue à la commande d'embrayage est minimisée.

A cet effet, dans un élément de transmission conforme à l'invention, lesdits moyens de commande comprennent des moyens de rappel de l'un au moins desdits embrayages en position fermée, la pression de fluide de commande dans la chambre de pression associée sollicitant ledit embrayage vers sa position ouverte.

Grâce à cette disposition, la conception de la source de pression de fluide de commande peut être modifiée de façon à minimiser l'énergie de fonctionnement, la sévérité de service, et l'encombrement. En outre, la durée de mise en pression du piston de commande sur les disques d'embrayage est rendue plus faible.

Suivant d'autres caractéristiques de l'invention, prises seules ou selon toutes les combinaisons techniquement envisageables :
- lesdits moyens de commande comprennent des moyens de rappel des deux embrayages en position fermée ;
- le fluide de commande est identique au fluide de lubrification et/ou de refroidissement ;
- le circuit de commande est partiellement commun avec le circuit de lubrification et/ou de refroidissement ;
- le circuit de commande comprend une source de pression, et pour chaque embrayage, une électrovanne reliant la chambre de pression respective à ladite source de pression, ladite électrovanne pouvant prendre sélectivement une pluralité de positions parmi une position de repos, dans laquelle la chambre de pression est reliée à un circuit de décharge, et des positions actives, dans lesquelles du fluide de commande sous pression peut circuler de la source de pression vers la chambre de pression;
- la source de pression comprend un générateur de pression, un accumulateur de pression, une conduite d'émission de fluide de commande, reliée d'une part audit générateur de pression, et d'autre part audit accumulateur de pression, et une électrovanne disposée entre l'accumulateur de pression et la conduite d'émission, ladite électrovanne étant adaptée pour sélectivement ouvrir ou fermer la liaison entre l'accumulateur et la conduite d'émission, de sorte que l'accumulateur fonctionne sélectivement suivant :
   • un mode récepteur dans lequel il est chargé par le générateur de pression ;
   • un mode émetteur dans lequel il débite du fluide de commande dans la conduite d'émission ; et
   • un mode neutre dans lequel il est isolé de la conduite d'émission ;
- le générateur comprend une pompe haute pression, un réservoir de fluide de commande, un clapet anti-retour, ladite pompe étant reliée en amont au réservoir et en aval à la conduite d'émission via le clapet anti-retour ;
- l'élément de transmission comprend un capteur de pression d'émission adapté pour mesurer la pression régnant dans la conduite d'émission, et la pompe comporte un moteur et une unité de commande dudit moteur, qui est reliée audit capteur de pression d'émission et qui pilote le moteur en fonction de valeur de pression mesurée par ledit capteur ;
- le circuit de commande comporte une soupape de sécurité reliée à la conduite d'émission et adaptée pour mettre en communication ladite conduite d'émission avec un circuit de décharge si la pression dans la conduite d'émission est supérieure à une valeur de seuil prédéterminée ;
- chaque chambre de pression est associée un capteur de pression de chambre adapté pour mesurer la pression régnant dans la chambre respective, et ledit élément de transmission comprend une unité de commande reliée auxdits capteurs de pression de chambre et adaptée pour piloter lesdites électrovannes en fonction des valeurs de pression mesurées par lesdits capteurs de pression de chambre; et
- le circuit de lubrification et/ou de refroidissement comporte une pompe basse pression et un réservoir de fluide de lubrification et/ou de refroidissement, relié à la pompe en amont de cette dernière.

L'invention vise également un véhicule automobile comprenant une chaîne de traction de type hybride parallèle, ladite chaîne de traction comprenant un moteur thermique, une boîte de vitesses, et un élément de transmission tel que décrit précédemment, reliant le moteur thermique à la boîte de vitesses.

Un mode particulier de réalisation de l'invention va maintenant être décrit plus en détail en référence aux dessins annexés, sur lesquels :
- la Figure 1 est une vue partielle en demi-coupe axiale d'un élément de transmission selon l'invention ;
- la Figure 2 est une vue de détail de la Figure 1, à plus grande échelle, qui représente un module de l'élément de transmission, comprenant essentiellement les embrayages, les arbres d'entrée et de sortie, l'organe intermédiaire et les pistons ; et
- la Figure 3 est un schéma du circuit hydraulique de commande, et du circuit hydraulique de refroidissement et de lubrification de l'élément de transmission des Figures 1 et 2.

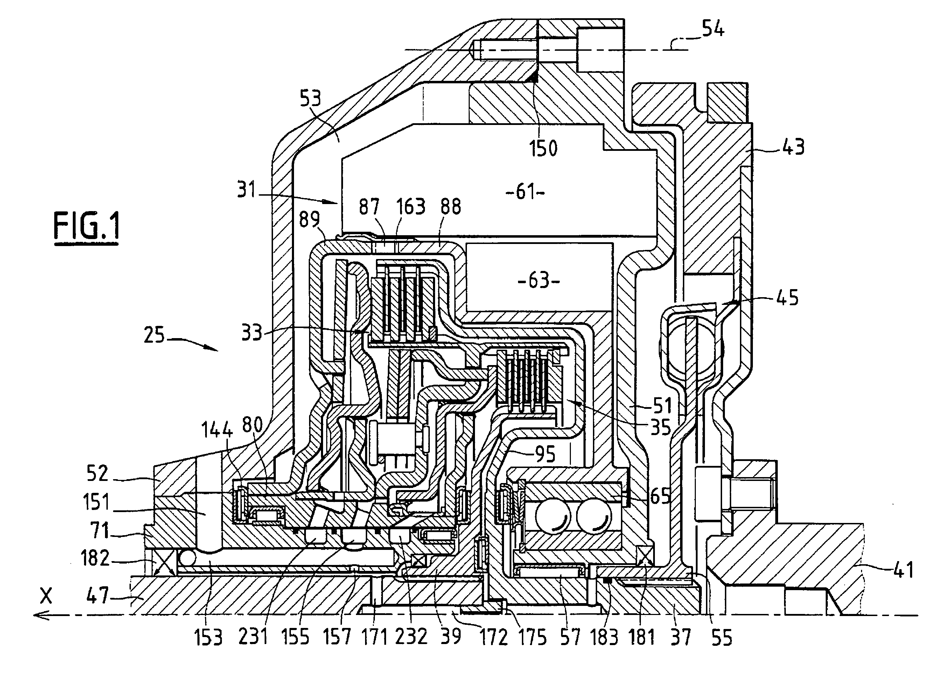

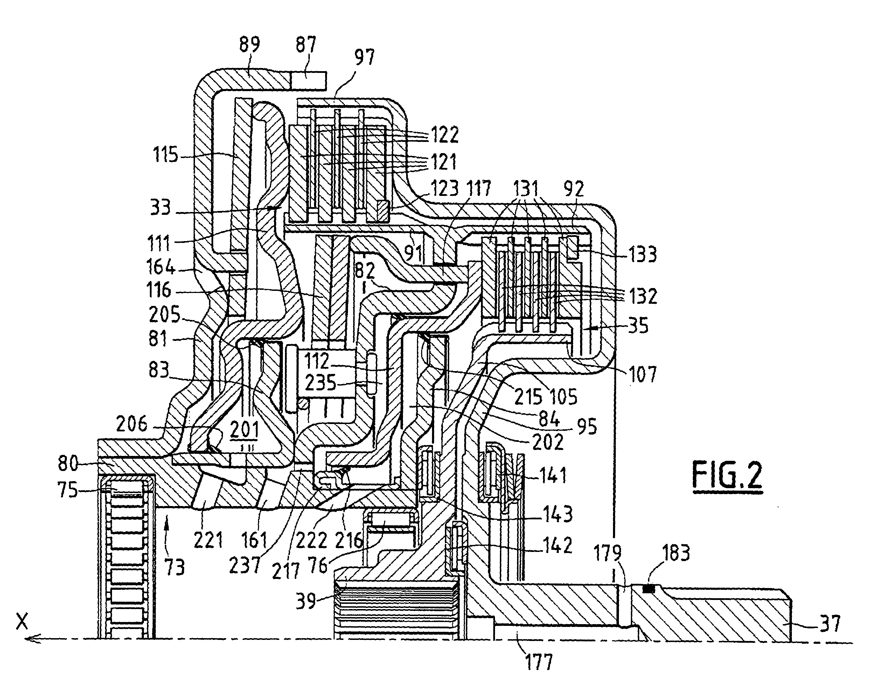

Sur les Figures 1 et 2, on a représenté un élément de transmission 25 conforme à l'invention, destiné à relier un moteur thermique à une boîte de vitesses. L'élément 25 de l'invention comporte une machine électrique 31, que l'on appellera « moteur électrique », un premier embrayage 33, et un deuxième embrayage 35.

L'élément de transmission 25 comporte en outre un arbre d'entrée de mouvement 37 et un arbre de sortie de mouvement 39 coaxiaux d'axe X. L'axe X est orienté de l'entrée vers la sortie pour la commodité de la description qui va suivre.

Les termes « amont » et « aval » s'entendront en référence à cette orientation.

L'arbre d'entrée 37 est solidaire en rotation du vilebrequin du moteur thermique, dont une partie, ou « nez », est représentée sur la Figure 1 sous la référence 41.

Dans l'exemple représenté, le vilebrequin 41 est muni d'un volant d'inertie 43, et relié à l'arbre d'entrée 37 par l'intermédiaire d'un dispositif amortisseur 45.

L'arbre de sortie 39 est lié en rotation à l'arbre primaire d'entrée de boîte de vitesses, dont une partie est représentée sur la Figure 1 sous la référence 47.

L'élément de transmission 25 comprend un carter constitué essentiellement d'une première demi-coquille 51 et d'une deuxième demi-coquille 52, assemblées par des moyens de fixation répartis sur la périphérie du carter et symbolisés sur la figure 1 par des lignes mixtes 54. Les demi-coquilles de carter 51, 52 délimitent intérieurement un logement 53, à l'intérieur duquel sont agencés le moteur électrique 31, les embrayages 33, 35 et les arbres d'entrée 37 et de sortie 39, de façon coaxiale.

L'arbre d'entrée 37 et l'arbre de sortie 39 sont montés rotatifs par rapport au carter 51, 52.

L'arbre d'entrée 37 est un arbre cannelé complémentaire d'un arbre creux 55 du dispositif amortisseur 45, et une partie d'extrémité de l'arbre d'entrée 37 fait saillie axialement de la première demi-coquille 51. L'arbre d'entrée 37 est monté rotatif sur la première demi-coquille 51 par l'intermédiaire d'un palier de roulement 57.

L'arbre de sortie 39 est un arbre creux à cannelures internes, de forme complémentaire de l'extrémité d'arbre d'entrée de boîte 47. Pour être mise en prise avec l'arbre de sortie 39, l'extrémité de l'arbre d'entrée de boîte 47 fait saillie à l'intérieur du logement 53.

Le moteur électrique 31 comprend un stator 61, pourvu d'un collecteur, solidaire de la première demi-coquille de carter 51, et un rotor 63 monté rotatif sur la première demi-coquille 51 par l'intermédiaire d'un roulement 65. Le rotor 63 est agencé radialement à l'intérieur du stator 61.

Les premier 33 et deuxième 35 embrayages sont de type humide, et l'élément de transmission 25 est muni d'un tube axial 71 de distribution de fluide de lubrification et de refroidissement ainsi que de commande. Ce tube 71 fait saillie à l'intérieur du logement 53 de la deuxième coquille de carter 52.

L'élément de transmission 25 comporte un organe intermédiaire de transmission 73 monté rotatif sur le tube 71, radialement à l'extérieur, par l'intermédiaire de deux roulements 75, 76.

L'organe intermédiaire 73 est formé essentiellement avec un moyeu 80, et quatre parois radiales 81, 82, 83, 84 décalées axialement les unes par rapport aux autres, et rendues solidaires du moyeu 80 par soudure pour les parois 81, 82, 84, et par frettage pour la paroi 83.

L'organe intermédiaire 73 est lié en rotation au rotor 63 par l'intermédiaire de dents axiales complémentaires 87 mutuellement en prise, et formées respectivement sur une partie périphérique du rotor 63, et sur une partie périphérique de la première paroi radiale 81.

La deuxième paroi radiale 82 est formée avec une couronne périphérique solidaire constituée d'une première demi-couronne 91 s'étendant dans la direction axiale aval, et d'une deuxième demi-couronne 92 s'étendant dans la direction axiale amont.

De façon correspondante, l'arbre d'entrée 37 est formé, de préférence d'une pièce, avec une paroi radiale 95 qui s'étend à l'intérieur du logement 53, et qui possède en périphérie une couronne axiale 97. La couronne axiale 97 s'étend de façon coaxiale et radialement extérieure par rapport à la demi-couronne aval 91. Le premier embrayage 33 est agencé entre ladite demi-couronne 91 et ladite couronne 97.

De la même façon, l'arbre de sortie 39 est formé, de préférence d'une seule pièce, avec une paroi radiale 105 qui s'étend à l'intérieur du logement 53, et qui présente à sa périphérie une couronne axiale 107. La couronne axiale 107 s'étend de façon coaxiale et radialement intérieure par rapport à la demi-couronne amont 92 de l'organe intermédiaire 73. Le deuxième embrayage 35 est agencé entre ladite demi-couronne 92 et ladite couronne axiale 107.

L'élément de transmission 25 comprend en outre un premier 111 et un deuxième 112 pistons d'actionnement respectivement du premier 33 et du deuxième 35 embrayages, ainsi qu'un premier 115 et un deuxième 116 organes-ressorts sollicitant respectivement le premier 111 et le deuxième 112 pistons en pression sur l'embrayage respectif 33, 35.

Entre le piston 112 et l'organe-ressort 116 est interposée, en appui axial, une entretoise présentant des doigts 117 essentiellement axiaux répartis sur la périphérie d'une couronne. Ces doigts 117 traversent la paroi 82.

Le premier embrayage 33 est essentiellement constitué d'une première série de disques 121 liés en rotation à la première demi-couronne 91 par des cannelures, et déplaçables axialement sur cette dernière, le long de ces cannelures, sous l'effet du piston 111 ; et d'une deuxième série de disques 122 liés en rotation à la couronne axiale 97 par des cannelures, et déplaçables axialement sur cette dernière, le long de ces cannelures également sous l'effet du piston 111. Les premiers 121 et deuxièmes 122 disques sont imbriqués les uns avec les autres de façon alternée.

Les disques 121, 122 sont arrêtés axialement par une butée 123 opposée au piston 111.

On comprend que les disques 121, 122 peuvent passer d'une position débrayée, dans laquelle les premiers disques 121 ne font pas contact avec les deuxièmes disques 122, et une position embrayée des premiers 121 et deuxièmes 122 disques dans laquelle les premiers 121 et deuxièmes 122 disques sont serrés les uns contre les autres.

Dans la position débrayée, l'arbre d'entrée 37 et l'organe intermédiaire 73 sont libres en rotation l'un par rapport à l'autre.

Le premier organe-ressort 115, constitué dans l'exemple représenté d'une rondelle-ressort, du type par exemple rondelle Belleville, est fixée à la première paroi radiale 81, et sollicite le piston 111 dans la position embrayée.

Le deuxième embrayage 35 est de constitution et de fonctionnement analogues au premier : il comprend une première série de disques 131 associée à la deuxième demi-couronne 92, et une deuxième série de disques 132 intercalés, associée à la couronne axiale 107. Le déplacement axial des disques 131, 132 est limité par une butée 133.

Dans l'exemple représenté, l'organe-ressort 116 est une double rondelle ressort, du type Belleville, fixée à la deuxième paroi 82. L'organe-ressort 116 sollicite le piston 112 vers la position embrayée du deuxième embrayage 35, par l'intermédiaire des doigts 117.

Comme on le voit sur la Figure 1, les deux embrayages 33, 35 sont décalés axialement et radialement suivant une disposition étagée ou « en escalier », à savoir que le premier embrayage 33 est disposé radialement à l'extérieur par rapport au deuxième embrayage 35. Ce dernier est agencé à l'intérieur du rotor 63.

L'élément de transmission 25 est en outre pourvu de butées à aiguilles, dont une première 141 est interposée axialement entre le roulement 65 et la paroi radiale 95 de l'arbre d'entrée 37 ; une deuxième 142 est interposée axialement entre la paroi radiale 95 et la paroi radiale 105 de l'arbre de sortie 39 ; une troisième 143 est interposée entre la paroi radiale 105 et la paroi radiale 84 de l'organe intermédiaire 73 ; et une quatrième 144 est interposée entre le moyeu 80 et un épaulement du tube 71.

Le tube de distribution de fluide 71 est adapté pour distribuer du fluide de lubrification et de refroidissement à l'intérieur de l'élément de transmission 25, c'est-à-dire à l'intérieur du logement 53. Ce dernier est fermé de façon étanche à ce fluide, notamment au niveau des jointures des deux demi-coquilles 51, 52 de carter, au moyen d'un joint périphérique 150.

Au voisinage de l'axe X, l'étanchéité de l'élément de transmission 25 au fluide de lubrification et de refroidissement est réalisée d'une part par un premier joint à lèvres 181, qui prend appui sur la première demi-coquille 51 et la surface extérieure de l'arbre creux 55, et par un deuxième joint à lèvres 182, qui prend appui sur la surface interne du tube 71 et sur les surfaces externes de l'arbre primaire d'entrée de boîte 47, et d'autre part par un joint torique 183 placé entre l'arbre d'entrée 37 et l'arbre creux 55.

Ce tube 71 présente, ménagé dans sa paroi, un premier canal radial 151 d'alimentation en fluide, un premier canal axial 153 de distribution relié audit canal d'alimentation 151, un orifice 155 ménagé entre le canal de distribution 153 et l'extérieur du tube 71, et un orifice 157 ménagé entre le canal de distribution 153 et l'intérieur du tube.

Le moyeu 80 de l'organe intermédiaire 73 est pourvu d'un canal 161 débouchant sur l'orifice 155, et mettant ainsi en communication le canal de distribution 153 et le logement 53.

En fonctionnement, le canal d'alimentation 151 est relié à un circuit, qui sera décrit plus loin, d'alimentation en fluide de refroidissement et de lubrification. Ce fluide est diffusé à l'intérieur du logement 53 via le canal de distribution 153, l'orifice 155, et le canal 161, de façon à lubrifier et refroidir le premier embrayage 33, le deuxième embrayage 35, et le moteur électrique 31.

On notera que le fluide de lubrification et de refroidissement est diffusé radialement vers le stator 61, grâce notamment au passage 163 ménagé au niveau des dents 87. Le dimensionnement de ce passage 163 permet de maîtriser le débit de fluide organisé entre la partie du logement 53 intérieure au rotor 63, et la partie extérieure dans laquelle est agencé le stator 61.

On notera également que la disposition relative des embrayages 33, 35, et du moteur électrique 31, permet, du fait de la centrifugation du fluide de lubrification et de refroidissement, de conserver le premier embrayage 33 dans un bain de fluide de lubrification et de refroidissement, en fonctionnement de l'élément de transmission 25, tandis que la région du deuxième embrayage 35 est le siège d'un brouillard de ce même fluide. L'intérêt de cette disposition est d'adapter la quantité de fluide, présente dans la région de chaque embrayage, notamment à l'énergie calorifique générée par ces embrayages.

Le bain de fluide, en général d'huile, dans lequel est conservé l'embrayage 33, est nivelé grâce à un passage 164 au niveau de la paroi radiale 81.

Le premier embrayage 33 étant soumis à des échauffements plus importants que le deuxième 35, il est en effet nécessaire d'organiser, au voisinage du premier embrayage, un débit de fluide de refroidissement nettement plus important.

Les échauffements plus importants de l'embrayage 33 par rapport à l'embrayage 35 sont dus aux phases de glissement, qui sont plus contraignantes pour le premier que pour le second. Par ailleurs, le fait de maintenir l'embrayage 35 dans un brouillard de fluide, plutôt que dans un bain, permet de réduire les efforts de traînée de ce fluide sur l'arbre primaire de boîte.

D'autre part, le fluide de refroidissement et de lubrification est distribué vers le palier 57 et le roulement 65 pour refroidir et lubrifier ces derniers, par l'intermédiaire successivement : du canal de distribution 153 ; de l'orifice 157 ; d'un passage radial 171 formé dans l'arbre primaire d'entrée de boîte 47 ; d'un canal axial 172 pratiqué dans cet arbre ; d'un ajutage 175 permettant de régler le débit de fluide ; d'un canal axial 177 formé dans l'arbre d'entrée 37; et enfin d'un passage radial 179 débouchant au voisinage du palier 57.

Le fluide distribué suivant ce cheminement s'écoule dans le logement 53, au travers du palier 57, vers le roulement 65 et le rotor 63, puis vers le stator 61. Le stator 61 et le rotor 63 sont donc refroidis et lubrifiés non seulement par du fluide ayant transité par l'orifice 155 et les passages 163, 164, mais également par du fluide ayant transité par l'orifice 157 et le cheminement précédemment détaillé. Ce fluide permet également de lubrifier les butées 141, 142, 143.

On va maintenant décrire les dispositions permettant de déplacer les pistons ou plateaux de pression 111, 112 et ainsi de faire passer les embrayages 33, 35 d'une position à une autre parmi leurs positions embrayée et débrayée.

Le premier piston 111 définit, avec la troisième paroi radiale 83 et la surface extérieure du moyeu 80, une première chambre de pression 201, tandis que le deuxième piston 112 définit, avec la quatrième paroi radiale 84 et la surface extérieure du moyeu 80, une deuxième chambre de pression 202.

La première chambre de pression 201 est rendue sensiblement étanche à un fluide de commande au moyen d'un joint à lèvres 205 fixé en périphérie de la paroi radiale 83, et portant sur une surface du piston 111, et d'un joint à lèvres 206 fixé sur un bord radialement interne du piston 111, et portant sur la surface extérieure du moyeu 80.

De façon analogue, la chambre de pression 202 est rendue sensiblement étanche par un premier joint 215 portant sur la paroi radiale 84 et le piston 112, et par un deuxième joint à lèvres 216 portant sur le piston 112 et la surface extérieure d'une pièce 217 rapportée sur le moyeu 80.

Chaque chambre de pression 201, 202 débouche dans l'alésage central du moyeu 80 via deux canaux respectifs 221, 222 de passage d'alimentation en fluide de commande, formés dans le moyeu 80.

Le tube de distribution de fluide 71 est pourvu, pour sa part, de deux canaux 231, 232 reliés à un circuit d'alimentation en fluide de commande via des canaux radiaux d'alimentation respectifs (non représentés) analogues au canal 151, et des canaux axiaux de distribution respectifs (non représentés) analogues au canal 153. Les canaux 231, 232 communiquent respectivement avec les passages 221, 222.

Dans l'exemple représenté, le fluide de commande est le même que le fluide de lubrification/refroidissement, les circuits de commande et de lubrification/refroidissement étant partiellement communs.

On comprend qu'à partir de la position initiale fermée de l'embrayage 33, 35, le passage à la position débrayée est réalisé par alimentation de la chambre de pression respective 201, 202 en fluide de commande sous pression. Le piston correspondant 111, 112 est alors déplacé axialement vers la direction aval, selon l'orientation de l'axe X (vers la gauche sur la figure 2), en comprimant l'organe ressort 115, 116 et en desserrant les empilages de disques 121, 122, 131, 132.

Sous l'effet du ressort 115, 116, le piston 111, 112 reprend sa position initiale lorsque l'on ramène la pression en fluide de commande dans la chambre de pression respective 201, 202 à sa valeur initiale basse. L'embrayage 33, 35 reprend alors sa position dite « naturellement fermée », c'est-à-dire embrayée, en l'absence d'alimentation de la chambre de pression 201, 202 en fluide de commande.

Il est entendu que les deux embrayages 33, 35 peuvent être actionnés indépendamment, et que la description qui précède relative au fonctionnement des embrayages 33, 35 s'applique à l'un et à l'autre de façon indépendante.

En outre, la pression de fluide de commande qui peut être délivrée aux chambres de pression 201, 202 peut varier sur une plage de valeurs, telle que l'embrayage correspondant 33, 35 peut être amené dans l'un parmi des états de transmission nulle (débrayée), totale (embrayée), ou partielle (glissante).

Il faut noter que la deuxième paroi radiale 82 et le piston 112 définissent entre eux une chambre de compensation 235, située du côté opposé à la deuxième chambre de pression 202 par rapport au piston 112. Cette chambre de compensation 235 est alimentée en fluide de lubrification et de refroidissement via le canal 161 et un orifice 237 ménagé dans la paroi radiale 82. Ainsi, à haut régime, les efforts supplémentaires engendrés sur le piston 112 par la centrifugation du fluide de commande contenu dans la deuxième chambre de pression 202 sont compensés, et le piston 112 fonctionne en permettant le passage, entre les disques 131, 132, du couple pour lequel il a été dimensionné. On peut également noter que le dimensionnement de l'embrayage 33, du piston 111, et du ressort 115, permet de s'affranchir d'une chambre de compensation pour la commande de cet embrayage 33.

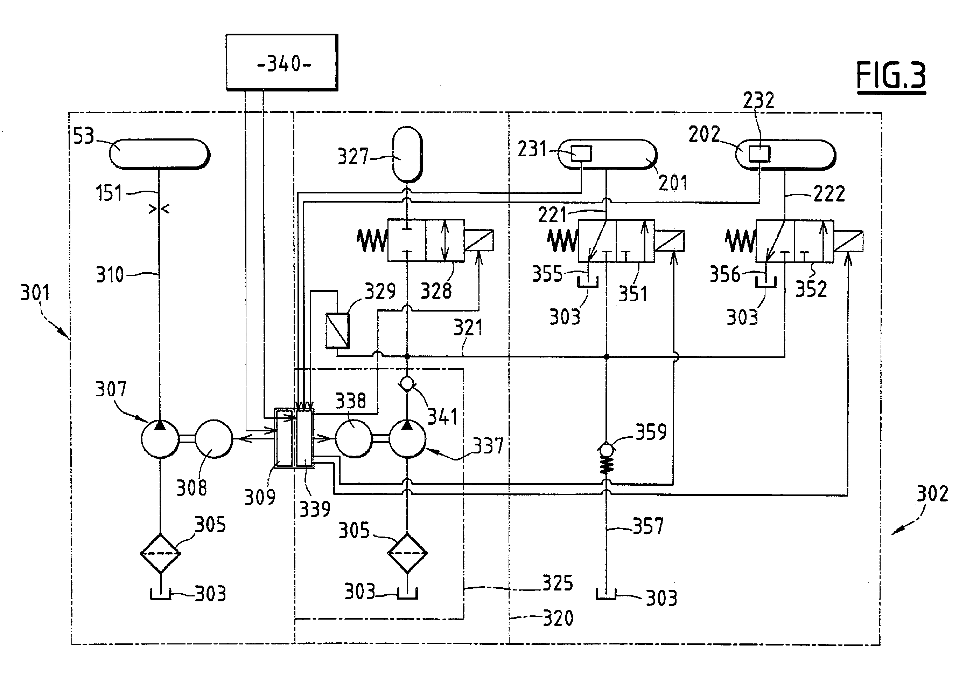

En référence à la Figure 3, on va maintenant décrire le circuit hydraulique de commande des embrayages 33, 35, et le circuit hydraulique de refroidissement et de lubrification de l'élément de transmission 25.

Le circuit de refroidissement et de lubrification 301 comprend
- un réservoir 303 de fluide de refroidissement et de lubrification, tel que de l'huile,
- un élément de filtration (ou crépine) 305 placé en sortie dudit réservoir,
- une pompe basse pression 307 dotée d'un moteur 308 et d'une unité 309 de commande dudit moteur, et
- un conduit de lubrification 310 reliant la pompe 307 au logement 53 de l'élément de transmission 25, par l'intermédiaire du canal d'alimentation 151, et du tube de distribution de fluide 71.

Le circuit de commande 302 comprend une source de pression 320, munie d'une conduite de sortie 321 constituant une conduite d'émission de fluide de commande vers les chambres de pression 201, 202 des embrayages 33, 35.

La source de pression 320 comprend un générateur de pression 325, un accumulateur de pression 327, une électrovanne 328 reliant l'accumulateur de pression 327 à la conduite d'émission 321, et un capteur de pression d'émission 329, qui mesure la pression de fluide de commande régnant dans la conduite d'émission 321.

Chaque chambre de pression 201, 202 est munie intérieurement d'un capteur respectif 231, 232 mesurant la pression qui règne à chaque instant dans la chambre. De façon alternative, l'information de pression dans les chambres 201, 202 pourrait être obtenue par des capteurs placés dans les canaux 221, 222.

Dans l'exemple représenté, le fluide de commande est identique au fluide de lubrification et de refroidissement, et le circuit de commande est partiellement commun avec le circuit de lubrification et de refroidissement.

Ainsi, le générateur de pression 325 comprend
- un réservoir de fluide de commande constitué du réservoir 303,
- un élément de filtration (ou crépine) placé en sortie du réservoir, et constitué du filtre 305,
- une pompe 337 haute pression, dotée d'un moteur 338 et d'une unité de commande 339 dudit moteur.

Dans l'exemple représenté, l'unité de commande 339 du moteur de pompe haute pression et l'unité de commande 309 du moteur de pompe basse pression sont physiquement réunies en un même organe central de commande.

Les unités de commande 309, 339 sont reliées à une unité de supervision 340 qui gère le fonctionnement de la chaîne de traction. L'unité de supervision 340 reçoit des informations d'état ou de fonctionnement d'organes du véhicule, et émet à son tour des signaux d'information respectifs vers les unités de commande 309, 339.

Le générateur de pression 325 comprend en outre un clapet anti-retour 341, par l'intermédiaire duquel la pompe haute pression 337 est reliée à la conduite d'émission 321, de telle sorte que le fluide de commande ne puisse circuler que de la pompe 337 vers la conduite d'émission 321.

L'électrovanne 328 est susceptible de prendre deux positions :
- dans la première position, de repos, correspondant à un mode de fonctionnement neutre de l'accumulateur 327, ce dernier est isolé de la conduite d'émission 321 (position représentée sur la Figure 3), et
- dans la deuxième position, active, l'accumulateur 327 est en communication avec la conduite d'émission 321, le fluide de commande pouvant s'écouler dans un sens ou dans l'autre. L'accumulateur fonctionne alors selon un mode récepteur ou un mode émetteur de fluide.

La conduite d'émission 321 est reliée à chacun des canaux 221, 222 de passage de fluide de commande, débouchant sur les chambres de pression respectives 201, 202, par l'intermédiaire d'électrovannes proportionnelles respectives 351, 352 à deux positions extrêmes.

Chacune de ces électrovannes 351, 352 du circuit de commande 302 peut prendre sélectivement une position parmi une position extrême de repos (représentée sur la Figure 3), une position extrême active, et des positions actives intermédiaires.

Dans la position de repos, la chambre de pression 201, 202 est mise en communication avec un circuit de décharge 355, 356, lequel peut déboucher par exemple dans le réservoir 303, et isolée de la conduite d'émission 321.

Dans les positions actives, la chambre de pression 201, 202 est mise en communication avec la conduite d'émission 321 de façon à pouvoir être alimentée en fluide de commande, tandis que le circuit de décharge 355, 356 est obturé au niveau de l'électrovanne 351, 352.

Le circuit de commande 302 comporte en outre un autre circuit de décharge 357 relié à la conduite d'émission 321 via une soupape de sécurité 359, prévue de façon à s'ouvrir et à mettre la conduite d'émission 321 en communication avec le circuit de décharge 357, lorsque la pression dans la conduite d'émission est supérieure à une valeur de seuil prédéterminée. Le circuit de décharge 357 peut être relié au réservoir de fluide de commande 303, de façon à recycler le fluide en excès dans la conduite d'émission 321.

L'unité de commande 309 pilote le moteur 308 en fonction de certains des signaux d'information, et éventuellement de signaux de consigne de lubrification et/ou de refroidissement, en provenance de l'unité de supervision 340.

L'unité de commande 339 est reliée en outre aux capteurs 231, 232, 329, desquels elles reçoit les informations de pression.

Dans d'autres formes de réalisation, un ou plusieurs de ces capteurs de pression 231, 232, 329 ne sont pas utilisés pour l'élaboration de la commande et peuvent donc être supprimés.

L'unité de commande 339 pilote le moteur 338 en fonction, notamment, de l'information de pression du capteur 329 et de certains des signaux d'information de l'unité de supervision 340.

En pratique, l'unité de commande 339 pilote non seulement le moteur 338, mais également l'électrovanne 328, et éventuellement les électrovannes 351, 352, de façon synchronisée, notamment en fonction des informations de pression des capteurs 231, 232 et de certains des signaux d'information de l'unité de supervision 340.

Par exemple, l'unité de commande 339 peut piloter le moteur 338 de façon à délivrer du fluide de commande dans la conduite d'émission 321, en vue de recharger l'accumulateur de pression 327, lorsque l'électrovanne 328 est dans sa deuxième position.

On va maintenant décrire plus particulièrement le fonctionnement du circuit de commande 302.

Les embrayages 33, 35 sont supposés, à l'état initial, dans leur position embrayée (ou fermée), la pression régnant dans les chambres de pression 201, 202 étant à une valeur basse P₀.

L'accumulateur de pression 327 doit, à chaque instant, être chargé de façon à pouvoir délivrer avec un temps de réponse très faible, dans les chambres de pression 201, 202, une pression de fluide dite « pression haute » P₁, suffisante pour déplacer les pistons 111, 112 jusqu'à amener les embrayages 33, 35 dans leur configuration débrayée (ou ouverte). Si tel n'est pas le cas, l'unité de commande 339 actionne le moteur de pompe 338, et l'électrovanne 328 est déplacée dans sa position active, de sorte que l'accumulateur de pression 327 est rechargé.

Lorsque l'un des embrayages 33, 35 doit être amené dans une position glissante, ou en position complètement débrayée, l'électrovanne correspondante 351, 352 est déplacée dans une position active adaptée. Simultanément, l'électrovanne 328 est également déplacée dans une position active. Le clapet anti-retour 341 empêchant le fluide contenu dans la conduite d'émission 321 de retourner vers le générateur 325, le fluide issu de l'accumulateur 327 est introduit dans la chambre de pression 201, 202, dans laquelle la pression atteint quasi-instantanément la valeur de consigne. A cette valeur de consigne est associée une position de la vanne proportionnelle respective 351 ou 352.

En particulier, la pression dans l'une et/ou l'autre des deux chambres peut atteindre quasi-instantanément la valeur haute P₁, qui constitue la valeur de commande de débrayage.

Bien entendu, les deux embrayages 33, 35 peuvent être actionnés de façon indépendante.

On comprend aussi que, si les deux embrayages 33, 35 doivent être amenés en position débrayée au même moment, les deux électrovannes 351, 352 sont manoeuvrées comme indiqué précédemment.

A titre d'exemple, l'invention peut être réalisée avec les caractéristiques suivantes :
- le moteur électrique 31 a une puissance mécanique de 16 kW ;
- les deux embrayages 33, 35 sont prévus pour pouvoir transmettre chacun un couple de 270 N.m ;
- la pompe basse pression 307 fournit un fluide à la pression maximale de 2 bar, avec un débit maximal de 6 1/min. ;
- la pompe haute pression 337 fournit un fluide à la pression maximale de 55 bar, avec un débit maximal de 0,9 1/min. ;
- l'accumulateur 327 a un volume de 84 cm³;
- les électrovannes 351, 352 ont une plage de fonctionnement de 0 à 15 bar ;
- la soupape de sécurité est tarée à 60 bar ; et
- la capacité du réservoir commun 303 est choisie égale environ à 2 litres.

Dans un autre mode de réalisation, il est prévu que le circuit de commande 302 et le circuit de lubrification et de refroidissement 301 utilisent des fluides différents. Les réservoirs 303 des deux circuits sont alors constitués de réservoirs distincts, les deux circuits étant alors essentiellement distincts.

## Revendications

1. Elément de transmission pour une chaîne de traction de type hybride parallèle, ledit élément (25) comprenant un arbre d'entrée (37) de mouvement destiné à être relié à un moteur thermique, un arbre (39) de sortie de mouvement destiné à être relié à une boîte de vitesses, une machine électrique (31) comportant un stator (67) et un rotor (63), un premier embrayage (33) de liaison entre l'arbre d'entrée (37) et le rotor (63), et un second embrayage (35) de liaison entre le rotor (63) et l'arbre de sortie (39), lesdits embrayages (33, 35) étant de type humide, ledit élément de transmission (25) comportant en outre un circuit (301) de fluide de lubrification et/ou de refroidissement, et des moyens de commande desdits embrayages (33, 35), qui comprennent un circuit de fluide de commande (302), notamment un circuit de commande hydraulique, le circuit de commande (302) comprenant une chambre de pression (201, 202) pour chaque embrayage (33, 35), telle que la pression de fluide de commande qui règne dans une chambre de pression (201, 202) détermine l'état de l'embrayage respectif (33, 35), **caractérisé en ce que** lesdits moyens de commande comprennent des moyens d'actionnement (111, 112) et des moyens de rappel (115, 116) de l'un au moins desdits embrayages (33, 35) en position fermée, lesdits moyens de rappel (115, 116) sollicitant les moyens d'actionnement (111, 112) en pression sur ledit embrayage (33, 35) la pression de fluide de commande dans la chambre de pression associée (201, 202) sollicitant ledit embrayage (33, 35) vers sa position ouverte.

2. Elément de transmission suivant la revendication 1, **caractérisé en ce que** lesdits moyens de commande comprennent des moyens de rappel (115, 116) des deux embrayages (33, 35) en position fermée.

3. Elément de transmission suivant la revendication 1 ou 2, **caractérisé en ce que** le fluide de commande est identique au fluide de lubrification et/ou de refroidissement.

4. Elément de transmission suivant la revendication 3, **caractérisé en ce que** le circuit de commande (302) est partiellement commun avec le circuit (301) de lubrification et/ou de refroidissement.

5. Elément de transmission suivant l'une quelconque des revendications 1 à 4, **caractérisé en ce que** le circuit de commande (302) comprend une source de pression (320), et pour chaque embrayage (33,35), une électrovanne (351, 352) reliant la chambre de pression respective (201, 202) à ladite source de pression, ladite électrovanne (351, 352) pouvant prendre sélectivement une pluralité de positions parmi une position de repos, dans laquelle la chambre de pression (201, 202) est reliée à un circuit de décharge (355, 356), et des positions actives, dans lesquelles du fluide de commande sous pression peut circuler de la source de pression (320) vers la chambre de pression (201, 202).

6. Elément de transmission suivant la revendication 5, **caractérisé en ce que** la source de pression (320) comprend un générateur de pression (325), un accumulateur de pression (327), une conduite (321) d'émission de fluide de commande, reliée d'une part audit générateur de pression (325), et d'autre part audit accumulateur de pression (327), et une électrovanne (328) disposée entre l'accumulateur de pression (327) et la conduite d'émission (321), ladite électrovanne (328) étant adaptée pour sélectivement ouvrir ou fermer la liaison entre l'accumulateur (327) et la conduite d'émission (321), de sorte que l'accumulateur (327) fonctionne sélectivement suivant :
- un mode récepteur dans lequel il est chargé par le générateur de pression (325);
- un mode émetteur dans lequel il débite du fluide de commande dans la conduite d'émission (321) ; et
- un mode neutre dans lequel il est isolé de la conduite d'émission (321).

7. Elément de transmission suivant la revendication 6, **caractérisé en ce que** le générateur (325) comprend une pompe haute pression (337), un réservoir (303) de fluide de commande, un clapet anti-retour (341), ladite pompe (337) étant reliée en amont au réservoir (303) et en aval à la conduite d'émission (321) via le clapet anti-retour (341).

8. Elément de transmission suivant la revendication 7, **caractérisé en ce qu'**il comprend un capteur de pression d'émission (329) adapté pour mesurer la pression régnant dans la conduite d'émission (321), et la pompe (337) comporte un moteur (338) et une unité (339) de commande dudit moteur, qui est reliée audit capteur de pression d'émission (329) et qui pilote le moteur (338) en fonction de valeur de pression mesurée par ledit capteur.

9. Elément de transmission suivant l'une quelconque des revendications 6 à 8, **caractérisé en ce que** le circuit de commande (302) comporte une soupape de sécurité (359) reliée à la conduite d'émission (321) et adaptée pour mettre en communication ladite conduite d'émission (321) avec un circuit de décharge (357) si la pression dans la conduite d'émission (321) est supérieure à une valeur de seuil prédéterminée.

10. Elément de transmission suivant l'une quelconque des revendications 5 à 9, **caractérisé en ce que** chaque chambre de pression (201, 202) est associée un capteur de pression de chambre (231, 232) adapté pour mesurer la pression régnant dans la chambre respective, et **en ce que** ledit élément de transmission comprend une unité de commande (339) reliée auxdits capteurs de pression de chambre (231, 232) et adaptée pour piloter lesdites électrovannes (328, 351, 352) en fonction des valeurs de pression mesurées par lesdits capteurs de pression de chambre (231, 232).

11. Elément de transmission l'une quelconque des revendications 1 à 10, **caractérisé en ce que** le circuit (301) de lubrification et/ou de refroidissement comporte une pompe basse pression (307) et un réservoir (303) de fluide de lubrification et/ou de refroidissement, relié à la pompe (307) en amont de cette dernière.

12. Véhicule automobile comprenant une chaîne de traction de type hydride parallèle, ladite chaîne de traction comprenant un moteur thermique, une boîte de vitesses, et un élément de transmission (25) selon l'une quelconque des revendications 1 à 11 reliant le moteur thermique à la boîte de vitesses.

## Claims

1. Transmission element for a traction chain of the parallel hybrid type, said element (25) comprising a movement input shaft (37) intended to be connected to a thermal engine, a movement output shaft (39) intended to be connected to a gear box, an electrical machine (31) comprising a stator (61) and a rotor (63), a first connecting clutch (33) between the input shaft (37) and the rotor (63), and a second connecting clutch (35) between the rotor (63) and the output shaft (39), the said clutches (33, 35) being of the wet type, the said transmission element (25) further comprising a circuit (301) of lubrication and/or cooling fluid, and control means of the said clutches (33, 35), which comprise a circuit of control fluid (302), in particular a hydraulic control circuit, the control circuit (302) comprising a pressure chamber (201, 202) for each clutch (33, 35), such that the pressure of control fluid which prevails in a pressure chamber (201, 202) determines the state of the respective clutch (33, 35), **characterized in that** the said control means comprise actuating means (111, 112) and return means (115, 116) of at least one of the said clutches (33, 35) to the closed position, the said return means (115, 116) acting on the actuating means (111, 112) under pressure on the said clutch (33, 35), the pressure of control fluid in the associated pressure chamber (201, 202) acting on the said clutch (33, 35) toward its open position.

2. Transmission element according to Claim 1, **characterized in that** the said control means comprise return means (115, 116) of the two clutches (33, 35) to closed position.

3. Transmission element according to Claim 1 or 2, **characterized in that** the control fluid is identical to the lubrication and/or cooling fluid.

4. Transmission element according to Claim 3, **characterized in that** the control circuit (302) is partially common with the lubrication and/or cooling circuit (301).

5. Transmission element according to any of Claims 1 to 4, **characterized in that** the control circuit (302) comprises a source of pressure (320), and for each clutch (33, 35), an electrovalve (351, 352) connecting the respective pressure chamber (201, 202) to the said source of pressure, the said electrovalve (351, 352) being capable of taking selectively a plurality of positions among a rest position, in which the pressure chamber (201, 202) is connected to a discharge circuit (355, 356), and active positions, in which pressurized control fluid can circulate from the source of pressure (320) toward the pressure chamber (201, 202).

6. Transmission element according to Claim 5, **characterized in that** the source of pressure (320) comprises a pressure generator (325), a pressure accumulator (327), an emission conduit (321) of control fluid, connected on the one hand to the said pressure generator (325) and on the other hand to the said pressure accumulator (327), and an electrovalve (328) disposed between the pressure accumulator (327) and the emission conduit (321), the said electrovalve (328) being adapted to open or close selectively the link between the accumulator (327) and the emission conduit (321), such that the accumulator (327) operates selectively according to:
- a receptor mode in which it is charged by the pressure generator (325);
- an emitter mode in which it dispenses control fluid into the emission conduit (321); and
- a neutral mode in which it is isolated from the emission conduit (321).

7. Transmission element according to Claim 6, **characterized in that** the generator (325) comprises a high pressure pump (337), a tank (303) of control fluid, a check valve (341), the said pump (337) being connected, upstream, to the tank (303) and, downstream, to the emission conduit (321) via the check valve (341).

8. Transmission element according to Claim 7, **characterized in that** it comprises an emission pressure sensor (329) adapted to measure the pressure prevailing in the emission conduit (321), and the pump (337) comprises a motor (338) and a control unit (339) of the said motor, which is connected to the said emission pressure sensor (329) and which drives the motor (338) as a function of pressure value measured by the said sensor.

9. Transmission element according to any of Claims 6 to 8, **characterized in that** the control circuit (302) comprises a security valve (359) connected to the emission conduit (321) and adapted to set in communication the said emission conduit (321) with a discharge circuit (357) if the pressure in the emission conduit (321) is higher than a predetermined threshold value.

10. Transmission element according to any of Claims 5 to 9, **characterized in that** each pressure chamber (201, 202) is associated to a chamber pressure sensor (231, 232) adapted to measure the pressure prevailing in the respective chamber, and **in that** the said transmission element comprises a control unit (339) connected to the said chamber pressure sensors (231, 232) and adapted to drive said electrovalves (328, 351, 352) as a function of the pressure valves measured by the said chamber pressure sensors (231, 232).

11. Transmission element according to any of Claims 1 to 10, **characterized in that** the lubrication and/or cooling circuit (301) comprises a low pressure pump (307) and a tank (303) of lubrication and/or cooling fluid, connected to the pump (307) upstream of the latter.

12. Motor vehicle comprising a traction chain of the parallel hybrid type, said traction chain comprising a thermal engine, a gear box, and a transmission element (25) according to any of Claims 1 to 11 connecting the thermal engine to the gear box.

## Patentansprüche

1. Übertragungselement für eine Zugkette des hybriden, parallelen Typs, wobei das Element (25) eine Bewegungseingangswelle (37) aufweist, die dazu bestimmt ist, mit einem Verbrennungsmotor verbunden zu werden, eine Bewegungsausgangswelle (39), die dazu bestimmt ist, mit einem Schaltgetriebe verbunden zu werden, eine elektrische Maschine (31), die einen Stator (61) und einen Rotor (63) aufweist, eine erste Kupplung (33) zum Verbinden zwischen der Eingangswelle (37) und dem Rotor (63), und eine zweite Kupplung (35) zum Verbinden zwischen dem Rotor (63) und der Ausgangswelle (39), wobei die Kupplungen (33, 35) des Nasskupplungstyps sind, wobei das Übertragungselement (25) ferner einen Schmier- und/oder Kühlmittelkreislauf (301) aufweist, und Mittel zum Steuern der Kupplungen (33, 35), die einen Steuerfluidkreislauf (302) aufweisen, insbesondere einen hydraulischen Steuerkreislauf, wobei der Steuerkreislauf (302) eine Druckkammer (201, 202) für jede Kupplung (33, 35) derart aufweist, dass der Steuerfluiddruck, der in einer Druckkammer (201, 202) herrscht, den Zustand der jeweiligen Kupplung (33, 35) bestimmt, **dadurch gekennzeichnet, dass** die Steuermittel Mittel zum Betätigen (111, 112) aufweisen und Mittel zum Zurückholen (115, 116) mindestens einer der Kupplungen (33, 35) in die geschlossene Position, wobei die Rückholmittel (115, 116) die Betätigungsmittel (111, 112) mit Druck auf der Kupplung (33, 35) belasten, wobei der Steuerdruck in der zugehörigen Druckkammer (201, 202) die Kupplung (33, 35) zu ihrer offenen Position hin belastet.

2. Übertragungselement nach Anspruch 1, **dadurch gekennzeichnet, dass** die Steuermittel Mittel zum Zurückholen (115, 116) der zwei Kupplungen (33, 35) in die geschlossene Position aufweisen.

3. Übertragungselement nach Anspruch 3 oder 2, **dadurch gekennzeichnet, dass** das Steuerfluid mit dem Schmier- und/oder Kühlmittel identisch ist.

4. Übertragungselement nach Anspruch 3, **dadurch gekennzeichnet, dass** der Steuerkreislauf (302) teilweise mit dem Schmier- und/oder Kühlmittelkreislauf (301) gemeinsam ist.

5. Übertragungselement nach einem der Ansprüche 1 bis 4, **dadurch gekennzeichnet, dass** der Steuerkreislauf (302) eine Druckquelle (320) und für jede Kupplung (33, 35) ein Magnetventil (351, 352) aufweist, das die jeweilige Druckkammer (201, 202) mit der Druckquelle verbindet, wobei das Magnetventil (355, 352) selektiv mehrere Positionen aus einer Ruheposition, in der die Druckkammer (201, 202) mit einem Entladungskreislauf (135, 356) verbunden ist, und aktiven Positionen, in welchen das Steuerfluiddruck unter Druck von der Druckquelle (320) zu der Druckkammer (201, 202) zirkulieren kann, einnehmen kann.

6. Übertragungselement nach Anspruch 5, **dadurch gekennzeichnet**, das die Druckquelle (320) einen Druckgenerator (325), einen Druckspeicher (327), eine Steuerfluid-Abgabeleitung (321), die einerseits mit dem Druckgenerator (325) und andererseits mit dem Druckspeicher (327) verbunden ist, und ein Magnetventil (328), das zwischen dem Druckspeicher (327) und der Abgabeleitung (321) angeordnet ist, aufweist, wobei das Magnetventil (328) selektiv die Verbindung zwischen dem Speicher (327) und der Abgabeleitung (321) derart öffnen oder schließen kann, dass der Speicher (321) selektiv gemäß einer der folgenden Betriebsarten funktioniert:
- einem Empfangsmodus, bei dem er von dem Druckgenerator (325) geladen wird;
- einem Abgabemodus, bei dem er Steuerfluid in die Abgabeleitung (321) fördert; und
- einem neutralen Modus, bei dem er von der Abgabeleitung (321) isoliert ist.

7. Übertragungselement nach Anspruch 6, **dadurch gekennzeichnet, dass** der Generator (325) eine Hochdruckpumpe (337), einen Steuerfluidbehälter (303), ein Rückschlagventil (341) aufweist, wobei die Pumpe (337) stromaufwärts mit dem Behälter (303) und stromabwärts mit der Abgabeleitung (321) über das Rückschlagventil (341) verbunden ist.

8. Übertragungselement nach Anspruch 7, **dadurch gekennzeichnet, dass** es einen Abgabedrucksensor (329) aufweist, der den Druck messen kann, der in der Abgabeleitung (321) herrscht, und wobei die Pumpe (337) einen Motor (338) und eine Steuereinheit (339) des Motors aufweist, die mit dem Abgabedrucksensor (329) verbunden ist und den Motor (338) in Abhängigkeit von dem von dem Sensor gemessenen Druckwert steuert.

9. Übertragungselement nach einem der Ansprüche 6 bis 8, **dadurch gekennzeichnet, dass** der Steuerkreislauf (302) ein Sicherheitsventil (359) aufweist, das mit der Abgabeleitung (321) verbunden ist und die Abgabeleitung (321) mit einem Entladungskreislauf (357) in Kommunikation bringen kann, wenn der Druck in der Abgabeleitung (321) größer ist als ein vorbestimmter Schwellenwert.

10. Übertragungselement nach einem der Ansprüche 5 bis 9, **dadurch gekennzeichnet, dass** jede Druckkammer (201, 202) mit einem Kammerdrucksensor (231, 232) verbunden ist, der den Druck messen kann, der in der jeweiligen Kammer herrscht, und **dadurch**, dass das Übertragungselement eine Steuereinheit (339) aufweist, die mit den Kammerdrucksensoren (231, 232) verbunden ist und die Magnetventile (328, 351, 352) in Abhängigkeit von den Druckwerten, die von den Kammerdrucksensoren (231, 232) gemessen werden, steuern kann.

11. Übertragungselement nach einem der Ansprüche 1 bis 10, **dadurch gekennzeichnet, dass** der Schmier- und/oder Kühlmittelkreislauf (301) eine Niederdruckpumpe (307) und einen Schmier- und/oder Kühlmittelbehälter (303) aufweist, der mit der Pumpe (307) stromaufwärts von dieser Letzteren verbunden ist.

12. Kraftfahrzeug, das eine Zugkette des parallelen hybriden Typs aufweist, wobei die Zugkette einen Verbrennungsmotor, ein Schaltgetriebe und ein Übertragungselement (25) nach einem der Ansprüche 1 bis 11 aufweist, das den Verbrennungsmotor mit dem Schaltgetriebe verbindet.
